# FASCICULE DE BREVET EUROPEEN

(11) **EP 1 385 710 B1**
(45) Date de publication et mention de la délivrance du brevet: **29.06.2005**
(21) Numéro de dépôt: 02727536.1
(22) Date de dépôt: 08.04.2002
(51) Int. Cl.: B60C 23/04

(54) **DISPOSITIF DE FIXATION D'UN MODULE ELECTRONIQUE DE SURVEILLANCE SUR UN PNEUMATIQUE**
VORRICHTUNG ZUR BEFESTIGUNG EINER ELEKTRONISCHEN ÜBERWACHUNGSVORRICHTUNG AN EINEM REIFEN
DEVICE FOR FIXING AN ELECTRONIC MONITORING DEVICE ONTO A TYRE

(30) Priorité: 09.04.2001 FR 0105071
(43) Date de publication de la demande: 04.02.2004
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: IMBERT, Lucette, F-63670 La Roche Blanche (FR)
(74) Mandataire: Dequire, Philippe
(86) Numéro de dépôt international: PCT/EP2002/003840
(87) Numéro de publication internationale: WO 2002/081238

(56) Documents cités:
- EP-A- 0 936 089
- WO-A-99/41093

## Description

L'invention concerne des pneumatiques équipés de modules électroniques de surveillance amovibles et de dispositif de fixation de tels modules sur les pneumatiques, modules généralement encapsulés dans des boîtiers rigides.

Il est devenu très important aujourd'hui de pouvoir contrôler les conditions de fonctionnement des pneumatiques, telles que la charge, la pression intérieure et la température intérieure, afin notamment de réduire le coût des pneumatiques et maximiser l'efficacité d'un véhicule. Bien entendu, de tels contrôles sont particulièrement intéressants sur des pneumatiques pour des Poids-lourds ou utilisés en génie civil, qui sont chers et qui peuvent être rechapés pour certains.

Les modules électroniques de surveillance existant aujourd'hui qui peuvent être auto-alimentés ou nécessiter une source extérieure d'alimentation énergétique, sont susceptibles de stocker des informations pour des évaluations futures et/ou de transmettre des données à la demande. Notons que des modules types sont notamment décrits dans les publication US 4 862 486, 5 218 861 et 5573610. Il est donc important de pouvoir accéder au module au cours de la vie du pneumatique voire même en vue de sa réparation ou de sa modification.

On préfère aujourd'hui, dans la mesure où les progrès faits nous le permettent, positionner ces modules à l'intérieur du pneumatique plutôt qu'à l'extérieur où ils sont soumis aux agressions de l'environnement telles que les conditions climatiques, les incidents sur les routes voire même le vandalisme.

Pour permettre de réaliser cette fixation amovible et également que cette fixation puisse avoir lieu en service après-vente, certaines solutions ont été proposées utilisant des emplâtres de réparation dans lesquels un boîtier porteur du module est inséré de façon amovible.

La publication EP-0 936 089 présentent de telles solutions dans lesquelles des modules comprenant à la fois des circuits et des batteries de rechargement sont insérés dans des emplâtres en caoutchouc assimilables à ceux utilisés pour effectuer des réparations et qui portent un logement circulaire permettant la mise en place du module, ces emplâtres sont fixés sous le sommet du pneumatique par un système auto-vulcanisant. Différents systèmes de fixation du module dans le logement sont présentés tel qu'un module avec une couronne de verrouillage ou avec un filetage pour réaliser son vissage.

De telles solutions peuvent effectivement être intéressantes, elles présentent néanmoins de nombreux inconvénients. En effet, la position de l'emplâtre en dessous du sommet est susceptible dans certains cas de générer des perturbations magnétiques sur le module lié à la présence notamment de nappes métalliques dans le sommet. Il peut donc être utile de pouvoir placer un tel dispositif ailleurs dans le pneumatique, par exemple au niveau de la zone basse. Or, la présence de batteries dans le module rend ce dernier plus lourd et plus encombrant, ce qui nuit au positionnement de ce dernier dans la zone basse du pneumatique.

Cette zone est en effet davantage soumise à des déformations qui risquent de nuire à la bonne tenue de l'interface entre l'emplâtre et le pneumatique. Ce phénomène est de plus accentué par la taille importante de la surface de l'emplâtre portant le module qui va engendrer une surface importante de travail sur le pneumatique. On notera, de plus, que la réalisation présentée ne permet pas d'utiliser un système plus classique de réparation avec une gomme de liaison avec un collage à chaud qui améliore cette tenue d'interface.

L'invention a pour objet des pneumatiques et des dispositifs de fixation amovibles de modules électroniques de surveillance susceptibles de comporter des batteries palliant l'ensemble des inconvénients précités.

Selon l'invention, le dispositif de fixation d'un module électronique de surveillance sur un pneumatique, comprend les caractéristiques de la revendication 1.

L'invention concerne également un pneumatique ainsi équipé.

D'autres avantages et caractéristiques de l'invention apparaîtront à la lecture d'un exemple de réalisation d'un pneumatique conforme à l'invention en référence aux dessins dans lesquels :
- la figure 1 est une représentation schématique d'un pneumatique sur lequel est fixé intérieurement un module de surveillance électronique conformément à l'invention,
- la figure 2 est une représentation en coupe du dispositif de fixation du module représenté sur la figure 1,
- la figure 3 est une représentation en coupe de l'emplâtre utilisé dans le dispositif de fixation représenté sur la figure 2,
- la figure 4 est une représentation en coupe de l'emplâtre représenté sur la figure 3 selon une variante de réalisation.

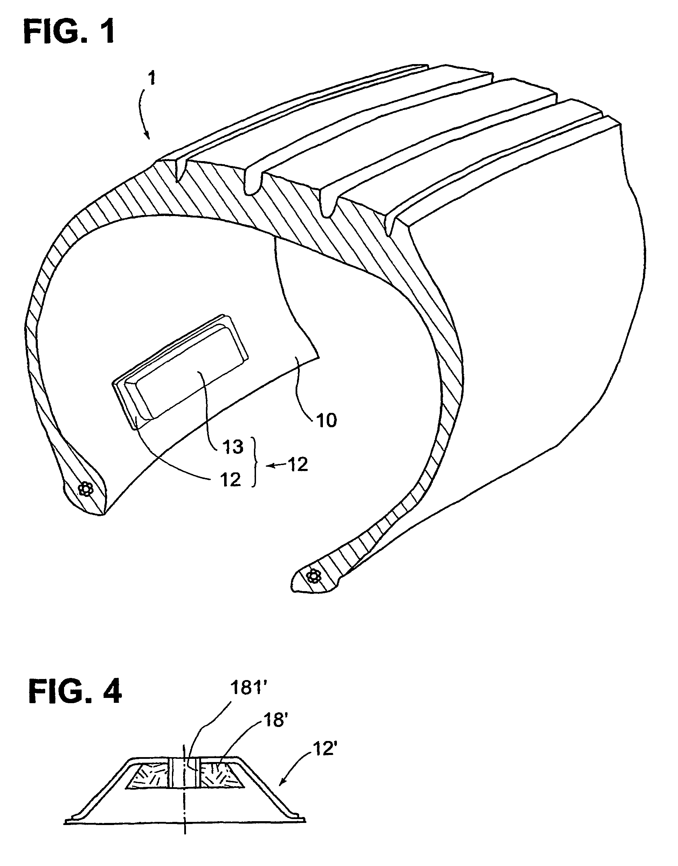

Selon la figure 1, le pneumatique 1 porte au niveau de son revêtement intérieur 10 un module électronique de surveillance porté par un dispositif de fixation 11.

Ce dispositif de fixation comprend un emplâtre de réparation 12 fixé sur le pneumatique et un boîtier 13 portant le module électronique et fixé sur l'emplâtre 12.

On ne décrira pas ici le contenu électronique du boîtier qui n'est pas l'objet de l'invention cependant on notera que dans l'exemple décrit ici il s'agit d'un module comprenant des batteries de rechargement ce qui représentent un encombrement et un poids certains. Toutefois comme cela est précisé plus loin, ce type de module ne saurait limiter la portée de l'invention à cette seule réalisation.

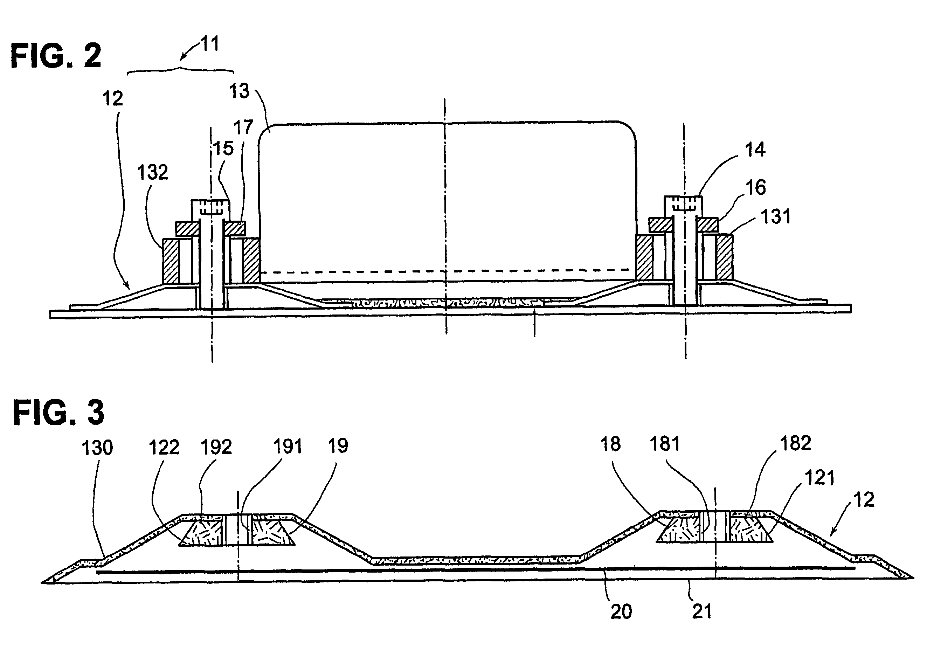

On décrira dans ce qui suit plus en détails le dispositif de fixation et son procédé de fabrication en référence aux figures 2, 3 et 4.

On utilisera les mêmes références pour des éléments identiques représentés sur les variantes de réalisation de l'emplâtre des figures 3 et 4.

Comme le montre la figure 2, le boîtier 13 porte deux pattes de fixation 131 et 132 sur l'emplâtre 12 par l'intermédiaire de deux vis 14 et 15 pour venir se visser dans l'emplâtre 12, des rondelles 16 et 17 coopérant avec les dites vis pour le maintien en position du boîtier 13 par rapport à l'emplâtre 12.

L'emplâtre 12 sera décrit plus précisément en référence à la figure 3. L'emplâtre 12 porte deux logements 121 et 122 de réception d'inserts 18 et 19 de forme tronconique qui porte en leur centre un filetage 181 et 191 destiné à coopérer avec les vis 14 et 15. La liaison entre l'emplâtre 12 réalisé en mélange élastomérique et les inserts est réalisé par collage, cependant la forme tronconique des inserts permet d'éviter que ces derniers ne risquent de se désolidariser de l'emplâtre sous certaines contraintes.

Le contour de l'emplâtre suit les formes tronconiques des inserts 18 et 19, ce qui permet à l'emplâtre par la forme particulière qu'il adopte d'agir vis-à-vis du boîtier 13 comme un silent-bloc amortissant les contraintes et déformations subies par le pneumatique et donc par l'emplâtre, cette disposition permet notamment de positionner le dispositif de fixation 11 en zone basse du pneumatique comme représenté sur le figure 1 mais également dans n'importe quelle autre position intérieur du pneumatique.

La surface extérieure 130 de l'emplâtre qui sera libre une fois l'emplâtre installé dans le pneumatique est recouverte d'un revêtement en caoutchouc butyle pour conserver son étanchéité vis-à-vis notamment des gaz et de l'oxydation. L'ensemble de l'emplâtre 12 pouvant être entièrement réalisé en caoutchouc butyle ou être constitué au coeur de l'emplâtre par d'autres mélanges élastomériques.

Comme on le voit clairement sur la figure 3, la surface 182, 192 respectivement des bases de plus faible diamètre des inserts 18, 19 n'est pas au contact de l'air mais au contact de la couche de caoutchouc butyle.

La nature de cet insert est choisie pour présenter à la fois une bonne adhérence avec le caoutchouc et une bonne rigidité ainsi ces inserts pourront être réalisés en « NYLON » (marque déposée), en bronze ou en laiton. Le choix du métal dans le cas d'un insert métallique est, en effet, limité afin de ne pas générer de champ magnétique susceptible d'interférer avec le module.

On peut prévoir la présence dans l'emplâtre 12 d'un tissu 20 tel qu'un tissu rayonne pour conférer à ce dernier une rigidité supplémentaire.

Sur la figure 3, l'emplâtre 12 est au contact d'un tissu polyester 21 qui sera enlevé lors de son utilisation, comme pour les emplâtres plus classiques de réparation, avec une gomme de liaison pour être fixé sur le pneumatique. On peut également prévoir un adhésif auto-vulcanisant pour la liaison avec le pneumatique cependant selon la position choisie de l'emplâtre par rapport au pneumatique, il peut être intéressant de conserver le système à chaud avec la gomme de liaison qui améliore la tenue de l'interface emplâtre-pneumatique.

L'emplâtre peut être réalisé par moulage à chaud sur les inserts dans un moule dans le cas où l'on choisit un seul mélange caoutchouteux pour le réaliser. On peut également réaliser un empilage de produits à froid dans un moule puis procéder à une cuisson.

La figure 4 représente une variante de réalisation de l'emplâtre 12' qui possède un seul insert 18' portant le filetage 181'. Cet emplâtre avec un seul insert peut suffire notamment si on envisage un module sans batteries donc de plus faible encombrement et poids. La vis de fixation du boîtier avec l'emplâtre peut dans un tel cas être directement solidaire du boîtier.

## Revendications

1. Dispositif de fixation d'un module électronique de surveillance sur un pneumatique, ledit dispositif de fixation (11) comprenant un emplâtre (12) en mélange caoutchouteux dont la surface destinée à être au contact de l'air porte au moins un insert rigide (18,19) comportant un filetage (181,191) destiné à coopérer avec une vis (14,15), **caractérisé en ce qu'**une patte de fixation (131,132) portée par un boîtier (13) portant le module de surveillance électronique coopère avec ladite vis (14,15) pour le maintien en position du boîtier (13) par rapport à l'emplâtre (12).

2. Dispositif selon la revendication 1, dans lequel l'insert (18, 19) a une forme tronconique de sorte que sa base de plus faible diamètre soit disposée à l'opposé de la surface de contact de l'insert avec le pneumatique.

3. Dispositif selon la revendication 2, dans lequel la forme extérieure de l'emplâtre (12) suit celle de l'insert (18, 19).

4. Dispositif selon l'une quelconque des revendications 1 à 3, dans lequel l'insert (18, 19) est réalisé en bronze.

5. Dispositif selon l'une quelconque des revendications 1 à 3, dans lequel l'insert (18, 19) est réalisé en « NYLON ».

6. Dispositif selon l'une quelconque des revendications 1 à 3, dans lequel l'insert (18, 19) est réalisé en laiton.

7. Dispositif selon l'une quelconque des revendications 1 à 6, dans lequel l'emplâtre (12) porte deux inserts (18, 19), la forme extérieure de l'emplâtre (12) suivant celles des deux inserts de sorte que l'emplâtre constitue un silent-bloc vis-à-vis du boîtier (12).

8. Dispositif selon l'une quelconque des revendications 1 à 7, dans lequel l'emplâtre (12) comporte un tissu de rigidification (20).

9. Dispositif selon la revendication 8, dans lequel le tissu de rigidification (20) est constitué par de la rayonne.

10. Dispositif selon l'une quelconque des revendications 1 à 9, dans lequel la surface (130) de l'emplâtre (12) destiné à être au contact de l'air est recouverte d'un revêtement imperméable aux gaz.

11. Dispositif selon la revendication 10, dans lequel le revêtement imperméable aux gaz est constitué par un caoutchouc butyle.

12. Pneumatique comportant un dispositif de fixation d'un module électronique de surveillance selon l'une quelconque des revendications 1 à 11.

## Patentansprüche

1. Vorrichtung zur Befestigung eines elektronischen Überwachungsmoduls an einem Luftreifen, wobei die Befestigungsvorrichtung (11) ein Pflaster (12) aus einer Kautschukmischung umfasst, dessen Oberfläche, die mit der Luft in Verbindung stehen soll, mindestens einen starren Einsatz (18, 19) aufweist, der ein Gewinde (181, 191) besitzt, das mit einer Schraube (14, 15) zusammenwirken soll, **dadurch gekennzeichnet, dass** ein Halter (131, 132) zur Befestigung, der sich an einem Gehäuse (13) befindet, das das elektronische Überwachungsmodul trägt, mit der Schraube (14, 15) zusammenwirkt, um das Gehäuse (13) bezogen auf das Pflaster (12) in seiner Position zu halten.

2. Vorrichtung nach Anspruch 1, worin der Einsatz (18, 19) eine kegelstumpfförmige Form aufweist, die so ist, dass die Grundfläche des Einsatzes mit dem kleineren Durchmesser auf der der Kontaktfläche des Einsatzes mit dem Luftreifen gegenüber liegenden Seite angeordnet ist.

3. Vorrichtung nach Anspruch 2, worin die äußere Form des Pflasters (12) der äußeren Form des Einsatzes (18, 19) folgt.

4. Vorrichtung nach einem der Ansprüche 1 bis 3, worin der Einsatz (18, 19) aus Bronze hergestellt ist.

5. Vorrichtung nach einem der Ansprüche 1 bis 3, worin der Einsatz (18, 19) aus "NYLON" hergestellt ist.

6. Vorrichtung nach einem der Ansprüche 1 bis 3, worin der Einsatz (18, 19) aus Messing hergestellt ist.

7. Vorrichtung nach einem der Ansprüche 1 bis 6, worin das Pflaster (12) zwei Einsätze (18, 19) aufweist, wobei die äußere Form des Pflasters (12) der äußeren Form der beiden Einsätze folgt, so dass das Pflaster gegenüber dem Gehäuse (12) einen Silentblock bildet.

8. Vorrichtung nach einem der Ansprüche 1 bis 7, worin das Pflaster (12) ein Versteifungsgewebe (20) enthält.

9. Vorrichtung nach Anspruch 8, worin das Versteifungsgewebe (20) aus Rayon besteht.

10. Vorrichtung nach einem der Ansprüche 1 bis 9, worin die Oberfläche (130) des Pflasters (12), die mit der Luft in Kontakt stehen soll, mit einer für Gase undurchlässigen Schicht überzogen ist.

11. Vorrichtung nach Anspruch 10, worin die gegenüber Gasen undurchlässige Schicht aus einem Butylkautschuk besteht.

12. Luftreifen, der eine Vorrichtung zur Befestigung eines elektronischen Überwachungsmoduls nach einem der Ansprüche 1 bis 11 aufweist.

## Claims

1. A device for fastening an electronic monitoring module to a tyre, said fastening device (11) comprising a patch (12) of rubber mix, the surface of which which is intended to be in contact with the air bears at least one rigid insert (18, 19) comprising a thread (181, 191) intended to cooperate with a screw (14, 15), **characterised in that** a fastening lug (131, 132) borne by a casing (13) bearing the electronic monitoring module cooperates with said screw (14, 15) in order to hold the casing (13) in position relative to the patch (12).

2. A device according to Claim 1, in which the insert (18, 19) has a frustoconical shape such that its base of lesser diameter is arranged at the opposite end to the contact surface of the insert with the tyre.

3. A device according to Claim 2, in which the outer shape of the patch (12) follows that of the insert (18, 19).

4. A device according to any one of Claims 1 to 3, in which the insert (18, 19) is made of bronze.

5. A device according to any one of Claims 1 to 3, in which the insert (18, 19) is made of nylon.

6. A device according to any one of Claims 1 to 3, in which the insert (18, 19) is made of brass.

7. A device according to any one of Claims 1 to 6, in which the patch (12) bears two inserts (18, 19), the outer form of the patch (12) following those of the two inserts such that the patch constitutes a shock mount with respect to the casing (12).

8. A device according to any one of Claims 1 to 7, in which the patch (12) comprises a stiffening fabric (20).

9. A device according to Claim 8, in which the stiffening fabric (20) is formed of rayon.

10. A device according to any one of Claims 1 to 9, in which the surface (130) of the patch (12) intended to be in contact with the air is covered with a gas-impermeable coating.

11. A device according to Claim 10, in which the gas-impermeable coating is formed by a butyl rubber.

12. A tyre comprising a device for fastening an electronic monitoring module according to any one of Claims 1 to 11.
